(19) Europäisches Patentamt
European Patent Office
Office européen des brevets

(11) **EP 4 106 097 A1**

(12) **EUROPEAN PATENT APPLICATION**
published in accordance with Art. 153(4) EPC

(43) Date of publication:
**21.12.2022 Bulletin 2022/51**

(51) International Patent Classification (IPC):
*H01M 50/51* (2021.01)          *H01M 10/42* (2006.01)
*H01M 50/20* (2021.01)

(21) Application number: **21912313.0**

(22) Date of filing: **30.04.2021**

(86) International application number:
**PCT/CN2021/091384**

(87) International publication number:
**WO 2022/226974 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Fujian 352100 (CN)**

(72) Inventors:
 • **XU, Xiaofu**
   **Ningde, Fujian 352100 (CN)**
 • **HU, Xia**
   **Ningde, Fujian 352100 (CN)**

 • **YE, Yonghuang**
   **Ningde, Fujian 352100 (CN)**
 • **XU, Guangyu**
   **Ningde, Fujian 352100 (CN)**
 • **JIN, Haizu**
   **Ningde, Fujian 352100 (CN)**
 • **LIANG, Chengdu**
   **Ningde, Fujian 352100 (CN)**
 • **LI, Quanguo**
   **Ningde, Fujian 352100 (CN)**

(74) Representative: **Ziebig Hengelhaupt Intellectual Property Attorneys**
**Patentanwaltsanwaltskanzlei PartGmbB**
**Leipziger Straße 49**
**10117 Berlin (DE)**

(54) **BATTERY MODULE, BATTERY PACK, ELECTRICAL APPARATUS, AND MANUFACTURING METHOD AND DEVICE FOR BATTERY MODULE**

(57)    The present application relates to a battery module, comprising a first type of battery cells and a second type of battery cells electrically connected at least in series, wherein the first type of battery cells and the second type of battery cells are battery cells with different chemical systems, the first type of battery cells comprises N first battery cells, and the second type of battery cells comprises M second battery cells, where N and M are integers of no less than 1; and the first battery cells and the second battery cells at least satisfy the following relationships: (1) $S1 \times CD1 \leq S2 \times CD2$; (2) $4.5 \times 10^3 \leq S1 \times C1 \leq 3.6 \times 10^4$, in Ah·W·°C/(g·L); and (3) $3 \times 10^4 \leq S2 \times CD2 \leq 8.5 \times 10^5$, in Ah·W·°C/(g·L); where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L.

Fig. 3

## Description

### TECHNICAL FIELD

This application relates to the technical field of energy storage devices, in particular to a battery module, a battery pack, an electric apparatus, and a method and device for manufacturing a battery module.

### BACKGROUND

Secondary batteries are clean and renewable resources, which can be used as driving energy sources or storage units in vehicles, energy storage and other fields. With the increasing requirements for environmental protection of energy sources, the application of the secondary batteries has become increasingly popular and widespread. In order to adapt to the needs of different environments and application scenarios, the industry puts forward new requirements for the performance of the secondary batteries.

At the present stage, in order to increase the total available energy of a secondary battery, multiple individual battery cells of the same chemical system are usually electrically connected in series or in parallel to form a battery module or battery pack with a relatively high capacity to output electrical energy to the outside. However, for a large-capacity battery module or battery pack, when one of the battery cells is out of thermal runaway, a large amount of heat is released instantly, which greatly affects other battery cells and causes thermal runaway of the entire battery module or battery pack.

Therefore, how to improve the heat spread in large-capacity battery modules or battery packs and improve the safety of the battery modules and battery packs is currently a technical problem that needs to be solved urgently in the field of secondary batteries.

### SUMMARY

The present application is completed in view of the above problems in the prior art, and its objective is to provide a battery module, which includes a first type of battery cells and a second type of battery cells with a different chemical system than that of the first type of battery cells, wherein the first type of battery cells and the second type of battery cells are electrically connected at least in series. By matching positive electrode plates of cells with different chemical systems and capacity characteristics of the cells per unit volume, the battery module or battery pack formed has a relatively high energy density from the thermal runaway mechanism of the large-capacity battery pack, and the safety of the battery module is improved.

A first aspect of the present application provides a battery module, including a first type of battery cells and a second type of battery cells electrically connected at least in series, wherein the first type of battery cells and the second type of battery cells are battery cells with different chemical systems, the first type of battery cells includes N first battery cells, and the second type of battery cells includes M second battery cells, where N and M are integers of no less than 1; and the first battery cells and the second battery cells at least satisfy the following relationships: (1) $S1 \times CD1 \leq S2 \times CD2$; (2) $4.5 \times 10^3 \leq S1 \times C1 \leq 3.6 \times 10^4$, in Ah·W·°C/(g·L); and (3) $3 \times 10^4 \leq S2 \times CD2 \leq 8.5 \times 10^5$, in Ah·W·°C/(g·L); where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L.

In any embodiment of the present application, $9 \times 10^3 \leq S1 \times CD1 \leq 2.5 \times 10^4$, and/or $4.03 \times 10^4 \leq S2 \times CD2 \leq 2.7 \times 10^5$.

In any embodiment of the present application, the battery module includes m second battery cells that are adjacent to at least one of the first battery cells and are continuously arranged, and satisfies: $1.33\,\mathrm{m} \leq m \times S2 \times CD2/(S1 \times CD1) < 113$, and $1 \leq m \leq 50$.

In any embodiment of the present application, the battery module includes m second battery cells that are adjacent to at least one of the first battery cells and are continuously arranged, and satisfies: $T1 \geq 0.05 \times m \times T2$, and $m \geq 1$, where T1 is a thickness of the first battery cell, and T2 is a thickness of the second battery cell, in mm; and optionally, $T1 \geq 0.33 \times m \times T2$.

In any embodiment of the present application, the battery module is composed of 1 or more repeating units, the repeating unit includes P first battery cells and Q second battery cells where P and Q are integers of no less than 1, and satisfies the following relationship: $15167 \leq (P \times S1 \times CD1 + Q \times S2 \times CD2)/(P + Q) < 109909$; and optionally, $31200 \leq (P \times S1 \times CD1 + Q \times S2 \times CD2)/(P + Q) \leq 102600$.

In any embodiment of the present application, a positive electrode active material for the first battery cell includes at least one of a lithium-containing phosphate represented by formula (I) or a lithium manganese-based oxide represented by formula (II),

$$LiFe_{1-x2-y2}Mn_{x2}M'_{y2}PO_4 \qquad \text{formula (I)}$$

$$Li_{1+x3}Mn_eN_{2-e}O_{4-d}B_d \qquad \text{formula (II)}$$

wherein in formula (I), $0 \leq x2 \leq 1$, $0 \leq y2 \leq 0.1$, and M' is one or more selected from transition metal elements and non-transition metal elements other than Fe and Mn; and in formula (II), $-0.1 \leq x3 \leq 0.2$, $0 < e \leq 2$, $0 \leq d < 1$, N is one or more of Ni, Fe, Cr, Ti, Zn, V, Al, Mg, Zr and Ce, and B is one or more of S, N, F, Cl, Br and I.

In any embodiment of the present application, the positive electrode active material for the first battery cell includes one or more of $LiFePO_4$, $LiMnPO_4$, $LiMn_{1-x3}Fe_{x3}PO_4$, $LiV_{1-x3}Fe_{x3}PO_4$, $LiMn_2O_4$, and $LiMn_{1.9}Al_{0.1}O_4$, where x3 independently satisfies $0 < x3 < 1$.

In any embodiment of the present application, based on 100% by weight of the positive electrode active material for the first battery cell, at least one of the lithium-containing phosphate represented by formula (I) or the lithium manganese-based oxide represented by formula (II) has a weight percentage of no less than 30%.

In any embodiment of the present application, a positive electrode active material for the second battery cell includes a lithium transition metal oxide represented by formula (III),

$$Li_{1+x1}Ni_aCo_bM_{1-a-b}O_{2-y1}A_{y1} \qquad \text{formula (III)}$$

where $-0.1 \leq x1 \leq 0.2$, $0.3 \leq a < 0.95$, $0 < b < 0.2$, $0 < a + b < 1$, $0 \leq y1 < 0.2$, M is one or more selected from Mn, Fe, Cr, Ti, Zn, V, Al, Zr and Ce, and A is one or more selected from S, F, Cl and I; and optionally, $0.5 \leq a < 0.95$, and $0 < b < 0.15$.

In any embodiment of the present application, based on 100% by weight of the positive electrode active material for the second battery cell, the lithium transition metal oxide represented by formula (III) has a weight percentage of no less than 70%.

A second aspect of the present application provides a battery pack, including the battery module described in the first aspect.

A third aspect of the present application provides an electric apparatus, including the battery module described in the first aspect or the battery pack described in the second aspect, wherein the battery module or the battery pack is used as a power source or an energy storage unit of the electric apparatus.

A fourth aspect of the present application provides a method for manufacturing a battery module, including the following steps:

obtaining a first type of battery cells and a second type of battery cells, in which the first type of battery cells and the second type of battery cells are battery cells with different chemical systems, the first type of battery cells includes N first battery cells, the second type of battery cells includes M second battery cells, where N and M are integers of no less than 1, and

the first battery cells and the second battery cells at least satisfy the following relationships:

$$(1) \; S1 \times CD1 \leq S2 \times CD2;$$

$$(2) \; 4.5 \times 10^3 \leq S1 \times C1 \leq 3.6 \times 10^4, \text{ in Ah·W·°C/(g·L);}$$

and

$$(3) \; 3 \times 10^4 \leq S2 \times CD2 \leq 8.5 \times 10^5, \text{ in Ah·W·°C/(g·L);}$$

where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L; and

electrically connecting the first type of battery cells and the second type of battery cells in series to form the battery module described in the first aspect of the present application.

A fifth aspect of the present application provides a device for manufacturing a battery module, including:

a clamping arm unit for obtaining a first type of battery cells and a second type of battery cells, wherein the first type of battery cells and the second type of battery cells are battery cells with different chemical systems, the first type of battery cells includes N first battery cells, and the second type of battery cells includes M second battery cells, where N and M are integers of no less than 1, and
the first battery cells and the second battery cells at least satisfy the following relationships:

$$(1)\ S1 \times CD1 \leq S2 \times CD2;$$

$$(2)\ 4.5 \times 10^3 \leq S1 \times C1 \leq 3.6 \times 10^4,\ \text{in Ah·W·°C/(g·L)};$$

and

$$(3)\ 3 \times 10^4 \leq S2 \times CD2 \leq 8.5 \times 10^5,\ \text{in Ah·W·°C/(g·L)};$$

where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L; an assembling unit for electrically connecting the first type of battery cells and the second type of battery cells in series at least to form the battery module described in the first aspect of the present application; and
a control unit for controlling the clamping arm unit and the assembling unit.

[Technical effect]

In the present application, the battery module includes a first type of battery cells and a second type of battery cells with different chemical systems and heat releases of the first type of battery cells and the second type of battery cells are matched to avoid heat spread to other individual battery cells in the case of thermal runaway of an individual battery cell in the battery module where a product of a total area of DSC exothermic peaks of a positive electrode plate in a battery cell and a capacity of the battery cell is used to characterize a maximum possible heat release of the individual battery cell under abnormal conditions, thereby improving the safety performance of the battery module.
The battery pack and the electric apparatus in the present application have at least the same technical advantages as the battery module because they include the battery module.

**DESCRIPTION OF THE DRAWINGS**

Fig. 1 is a schematic diagram showing an example of a battery cell of the present application.
Fig. 2 is an exploded view showing an example of the battery cell of the present application shown in Fig. 1.
Fig. 3 is a schematic diagram showing an example of a battery module of the present application.
Fig. 4 is a schematic diagram showing an example of a battery pack of the present application.
Fig. 5 is an exploded view showing an example of the battery pack of the present application shown in Fig. 4.
Fig. 6 is a schematic diagram showing an example of an electric apparatus using the battery module of the present application as a power source.
Fig. 7 is a schematic diagram showing DSC curves of positive electrode plates of battery cells with different chemical systems obtained by DSC test.

In the figures, reference numerals are as follows:

5, 5a, 5b    battery cell
51    shell
52    electrode assembly

| 53 | cover plate |
| 4 | battery module |
| 1 | battery pack |
| 2 | upper box |
| 3 | lower box |

## DETAILED DESCRIPTION

The "range" disclosed herein is defined in the form of a lower limit and an upper limit. A given range is defined by selecting a lower limit and an upper limit, and the selected lower limit and upper limit define the boundaries of a particular range. The range defined in this way can include or exclude end values, and can be combined arbitrarily, that is, any lower limit can be combined with any upper limit to form a range. For example, if a range of 60-120 and 80-110 is listed for a specific parameter, it is understood that a range of 60-110 and 80-120 is also expected. In addition, if the minimum range values 1 and 2 are listed, and if the maximum range values 3, 4 and 5 are listed, the following ranges can all be expected: 1-3, 1-4, 1-5, 2-3, 2-4 and 2-5. In the present application, unless otherwise specified, the numerical range "a-b" represents an abbreviation of any combination of real numbers between a and b, where both a and b are real numbers. For example, the numerical range "0-5" represents all real numbers "0-5" listed herein, and "0-5" is only an abbreviation of a combination of these values. In addition, when a parameter is expressed as an integer $\geq$ 2, it is equivalent to disclosing that the parameter is, for example, an integer 2, 3, 4, 5, 6, 7, 8, 9, 10, 11, 12, etc.

In the present application, unless otherwise specified, all the embodiments and preferred embodiments mentioned herein can be combined with each other to form new technical solutions.

In the present application, unless otherwise specified, all the technical features and preferred features mentioned herein can be combined with each other to form new technical solutions.

In the present application, unless otherwise specified, all the steps mentioned herein can be carried out sequentially or randomly, but preferably carried out sequentially. For example, the method includes steps (a) and (b), which represents that the method may include steps (a) and (b) performed sequentially, or may include steps (b) and (a) performed sequentially. For example, the method may further include step (c), which represents that step (c) may be added to the method in any order, for example, the method may include steps (a), (b) and (c), or steps (a), (c) and (b), or steps (c), (a) and (b).

In the present application, unless otherwise specified, the expression "comprise" and "include" mentioned herein is open-ended or closed-ended. For example, the expression "comprise" and "include" may comprise or include other components that are not listed, or comprise or include only the listed components.

In the description herein, it should be noted that, unless otherwise specified, a numeric range described with the term "above" or "below" includes the lower or upper limit itself, and "more" in "one or more" means two or more.

In the description herein, unless otherwise specified, the term "or" is inclusive. For example, the phrase "A or B" means "A, B, or both A and B". More specifically, any of the following conditions satisfy the condition "A or B": A is true (or exists) and B is false (or does not exist); A is false (or does not exist) and B is true (or exists); or both A and B are true (or exist).

[Battery cell]

In the present application, the "battery cell" refers to a battery unit that can be independently charged and discharged. The battery cell includes a positive electrode plate, a negative electrode plate, a separator, an electrolytic solution, and an outer package for packaging the positive electrode plate, the negative electrode plate, the separator and the electrolytic solution. The type and shape of the battery cell are not particularly limited in the present application, and the battery cell may be various types of battery cells, such as a soft-packed battery cell, a cylindrical battery cell, or a square battery cell. The battery cell in the present application may be a lithium ion battery cell, a potassium ion battery cell, a sodium ion battery cell, a lithium sulfur battery cell, etc., and the lithium ion battery cell is particularly preferred. During charge and discharge of the battery unit, active ions are repeatedly intercalated and deintercalated between the positive electrode plate and the negative electrode plate. The electrolytic solution conducts ions between the positive electrode plate and the negative electrode plate.

In the present application, the "battery cell" refers to a battery unit that can be independently charged and discharged. The components of the battery cell may include a positive electrode plate, a negative electrode plate, a separator, an electrolytic solution, and an outer package for packaging the positive electrode plate, the negative electrode plate, the separator and the electrolytic solution. The type and shape of the battery cell are not particularly limited in the present application, and the battery cell may be various types of battery cells, such as a soft-packed battery cell, a cylindrical battery cell, or a square battery cell. The battery cell in the present application may be a lithium ion battery cell, a potassium ion battery cell, a sodium ion battery cell, a lithium sulfur battery cell, etc., and the lithium ion battery cell is particularly preferred. During charge and discharge of the battery, active ions are repeatedly intercalated and deintercalated between the positive electrode plate and the negative electrode plate. The electrolytic solution conducts ions between the positive electrode plate and the negative electrode plate.

In the present application, the "chemical system" of the battery cell is classified according to the composition of a positive electrode active material used in the positive electrode plate of the battery cell, and the elements or substances with which the positive electrode active material is doped or covered are not limited. For example, the battery cell whose positive electrode active material is lithium iron phosphate (including those doped with Mn or V elements) may be defined as a battery cell of a lithium iron phosphate chemical system. The battery cell whose positive electrode active material is lithium nickel cobalt manganate (generally referred to as NCM) may be defined as a battery cell of a NCM chemical system. Further, the chemical system of the battery cell may be further limited based on the relative content of nickel, cobalt, and manganese in the positive electrode active material. For example, the battery cell whose positive electrode active material is $LiNi_{0.5}CO_{0.2}Mn_{0.3}O_2$ (generally referred to as NCM523) may be defined as a battery cell of a NCM523 chemical system, the battery cell whose positive electrode active material is $LiNi_{0.6}Co_{0.2}Mn_{0.2}O_2$ (generally referred to as NCM622) may be defined as a battery cell of a NCM622 chemical system, and the battery cell whose positive electrode active material is $LiNi_{0.8}Co_{0.1}Mn_{0.1}O_2$ (generally referred to as NCM811) may be defined as a battery cell of a NCM811 chemical system. The battery cell of lithium nickel cobalt aluminate system (generally referred to as NCA) as a positive electrode material may be defined as a battery cell of a NCA chemical system. In addition, in the present application, a battery cell of a hybrid system may also be used, for example, a battery cell of a hybrid system including NCM and NCA.

Hereinafter, the basic structures of the negative electrode plate, the positive electrode plate, the electrolytic solution, and the separator of the battery cell in the present application will be first described.

<Positive electrode plate>

In the battery cell of the present application, the positive electrode plate includes a positive electrode current collector and a positive electrode film disposed on at least one surface of the positive electrode current collector and including a positive electrode active material. For example, the positive electrode current collector has two opposite surfaces in its thickness direction, and the positive electrode film is disposed on either or both of the two opposite surfaces of the positive electrode current collector. In the battery cell of the present application, the positive electrode current collector may be a metal foil or a composite current collector. For example, the metal foil may be an aluminum foil, and the composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver and silver alloy) on a polymer material substrate (such as substrates of polypropylene (PP), polyethylene terephthalate (PET), polybutylene terephthalate (PBT), polystyrene (PS), polyethylene (PE) and copolymers thereof).

In the battery cell of the present application, the positive electrode active material may be a positive electrode active material for a battery cell known in the art. For example, the positive electrode active material may include one or more of the following: an olivine structured lithium-containing phosphate, a lithium transition metal oxide, and respective modified compounds thereof. However, the present application is not limited to these materials, and other traditional materials that can be used as positive electrode active materials for battery cells can also be used. These positive electrode active materials may be used alone, or two or more of them may be used together. Examples of the lithium transition metal oxide may include, but are not limited to, one or more of a lithium cobalt oxide (such as $LiCoO_2$), a lithium nickel oxide (such as $LiNiO_2$), a lithium manganese oxide (such as $LiMnO_2$ and $LiMn_2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$ (NCM333), $LiNi_{0.5}Co_{0.2}Mn_{0.3}O_2$ (NCM523), $LiNi_{0.5}Co_{0.25}Mn_{0.25}O_2$ (NCM211), $LiNi_{0.6}Co_{0.2}Mn_{0.2}O_2$ (NCM622), and $LiNi_{0.8}Co_{0.1}Mn_{0.1}O_2$ (NCM811)), a lithium nickel cobalt aluminum oxide (such as $LiNi_{0.85}Co_{0.15}Al_{0.05}O_2$), and modified compounds thereof. Examples of the olivine structured lithium-containing phosphate may include, but are not limited to, one or more of a lithium iron phosphate (such as $LiFePO_4$ (LFP)), a composite material of lithium iron phosphate and carbon, a lithium manganese phosphate (such as $LiMnPO_4$), a composite material of lithium manganese phosphate and carbon, a lithium iron manganese phosphate, and a composite material of lithium iron manganese phosphate and carbon.

In some embodiments, the positive electrode film may further optionally include a binder. Non-limiting examples of the binder that can be used in the positive electrode film may include one or more of the following: polyvinylidene fluoride (PVDF), polytetrafluoroethylene (PTFE), vinylidene fluoride-tetrafluoroethylene-propylene copolymer, vinylidene fluoride-hexafluoropropylene-tetrafluoroethylene terpolymer, tetrafluoroethylene-hexafluoropropylene copolymer and fluorinated acrylate resin.

In some embodiments, the positive electrode film may further optionally include a conductive agent. Examples of the conductive agent used in the positive electrode film may include one or more of superconducting carbon, acetylene black, carbon black, Ketjen black, carbon dots, carbon nanotubes, graphene, and carbon nanofibers.

In one embodiment of the present application, a positive electrode can be prepared by the following way: the above-mentioned components for preparing the positive electrode, such as the positive electrode active material, the conductive agent, the binder, and any other components, are dissolved in a solvent (such as N-methylpyrrolidone) to form a uniform positive electrode slurry; and the positive electrode slurry is applied on the positive electrode current collector, and the positive electrode plate can be obtained after steps of drying, cold pressing, etc.

< Negative electrode plate>

The battery cell of the present application includes a negative electrode plate, the negative electrode plate includes a negative electrode current collector and a negative electrode film disposed on at least one surface of the negative electrode current collector, and the negative electrode film includes a negative electrode active material.

In one embodiment of the present application, the negative electrode active material in the negative electrode film may be a negative electrode active material commonly used in the art, such as one or more of natural graphite, artificial graphite, soft carbon, hard carbon, a silicon-based material, a tin-based material, and lithium titanate. The silicon-based material may be one or more selected from elemental silicon, a silicon oxide, and a silicon-carbon composite. The tin-based material may be one or more selected from elemental tin, a tin oxide, and a tin alloy.

In the battery cell of the present application, in addition to the negative electrode active material, the negative electrode film may further include an optional binder, an optional conductive agent, and other optional additives. The negative electrode film of the present application is usually formed by coating and drying a negative electrode slurry. The negative electrode slurry is usually formed by dispersing the negative electrode active material and the optional conductive agent and binder in a solvent with stirring uniformly. The solvent may be N-methylpyrrolidone (NMP) or deionized water.

As an example, the conductive agent may include one or more of superconducting carbon, carbon black (such as acetylene black, or Ketjen black), carbon dots, carbon nanotubes, graphene and carbon nanofibers.

As an example, the binder may include one or more of styrene butadiene rubber (SBR), water-soluble unsaturated resin SR-1B, polyacrylic acid (PAA), polyacrylic acid sodium (PAAS), polyacrylamide (PAM), polyvinyl alcohol (PVA), sodium alginate (SA) and carboxymethyl chitosan (CMCS). As an example, the binder may include one or more of styrene-butadiene rubber (SBR), polyvinyl alcohol (PVA), sodium alginate (SA), polymethacrylic acid (PMAA) and carboxymethyl chitosan (CMCS). The other optional additives are, for example, a thickener (such as sodium carboxymethyl cellulose CMC-Na), a PTC thermistor material, etc.

In addition, in the battery cell of the present application, the negative electrode plate does not exclude other additional functional layers other than the negative electrode film. For example, in some embodiments, the negative electrode plate of the present application may further include a conductive undercoat (for example, composed of a conductive agent and a binder) sandwiched between the negative electrode current collector and a first negative electrode film and disposed on the surface of the negative electrode current collector. In some other embodiments, the negative electrode plate of the present application may further include a covering protective layer covering the surface of a second negative electrode film.

In the battery cell of the present application, the negative electrode current collector may be a metal foil or a composite current collector. For example, the metal foil may be a copper foil, a silver foil, an iron foil, or a foil composed of an alloy of the foregoing metals. The composite current collector may include a polymer material base layer and a metal layer formed on at least one surface of the polymer material base layer, and may be formed by forming a metal material (copper, copper alloy, nickel, nickel alloy, titanium, titanium alloy, silver and silver alloy, etc.) on the polymer material base layer (such as a base layer prepared from polypropylene (PP), polyethylene terephthalate (PET), polybutylene terephthalate (PBT), polystyrene (PS), polyethylene (PE) and copolymers thereof).

< Electrolytic solution>

The electrolytic solution conducts ions between the positive electrode plate and the negative electrode plate. The electrolytic solution includes an electrolyte salt and a solvent. In some embodiments, the electrolyte salt may be one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI) ), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate ($LiPO_2F_2$), lithium difluorobisoxalate phosphate (LiDFOP) and lithium tetrafluorooxalate phosphate (LiTFOP).

In one embodiment of the present application, the solvent may be one or more selected from the following: ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and ethylsulfonylethane (ESE).

In one embodiment of the present application, based on a total weight of the electrolytic solution, a content of the solvent is 60-99 wt%, such as 65-95 wt%, or 70-90 wt%, or 75-89 wt%, or 80-85 wt%. In one embodiment of the present application, based on a total weight of the electrolytic solution, a content of the electrolyte is 1-40 wt%, such as 5-35 wt%, or 10-30 wt%, or 11-25 wt%, or 15-20 wt%.

In one embodiment of the present application, the electrolytic solution may further optionally include an additive. For example, the additive may include one or more of the following: a negative electrode film-forming additive, a positive electrode film-forming additive, and an additive that can improve certain performance of the battery, such as an additive that improves the overcharge performance of the battery, an additive that improves the high-temperature performance of the battery, and an additive that improves the low-temperature performance of the battery.

< Separator>

In one embodiment of the present application, the battery cell further includes a separator, wherein the separator separates the positive electrode plate and the negative electrode plate of the battery cell and provides selective permeation or blocking of materials of different types, sizes, and charges in the system. For example, the separator can insulate electrons, and physically isolate the positive and negative electrode active materials of the battery cell to prevent internal short circuits and formation of an electric field in a certain direction, while allowing the ions in the battery pass through the separator and move between the positive and negative electrodes.

In one embodiment of the present application, the material used to prepare the separator may include one or more of glass fibers, a non-woven fabric, polyethylene, polypropylene and polyvinylidene fluoride. The separator may be a single-layer film or a multi-layer composite film. When the separator is a multi-layer composite film, materials of respective layers may be the same or different.

In one embodiment of the present application, the above-mentioned positive electrode plate, negative electrode plate and separator can be made into an electrode assembly/bare cell through a winding process or a lamination process.

In one embodiment of the present application, the battery cell further includes an outer package, and the outer package can be used to package the above-mentioned electrode assembly and electrolyte. In some embodiments, the outer package of the battery cell may be a hard case, such as a hard plastic case, an aluminum case, or a steel case. In other embodiments, the outer package of the battery cell may be a soft bag, such as a pocket type soft bag. The material of the soft bag may be plastic, such as one or more of polypropylene (PP), polybutylene terephthalate (PBT), and polybutylene succinate (PBS).

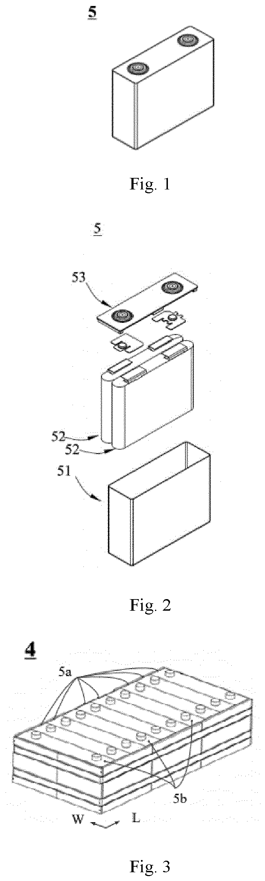

Fig. 1 is a schematic diagram showing an example of a battery cell 5 of the present application. Fig. 2 is an exploded view showing an example of the battery cell 5 of the present application shown in Fig. 1.

The outer package may include a shell 51 and a cover plate 53, the shell 51 may include a bottom plate and side plates connected to the bottom plate, and the bottom plate and the side plates enclose a receiving cavity. The shell 51 has an opening communicated with the receiving cavity, and the cover plate 53 can cover the opening to close the receiving cavity. The positive electrode plate, the negative electrode plate and the separator can form an electrode assembly 52 through a winding process or a lamination process, the electrode assembly is packaged in the receiving cavity, and the electrolytic solution infiltrates the electrode assembly 52. The number of electrode assemblies 52 included in the battery cell 5 may be one or more.

[Battery module]

In the present application, the "battery module" is formed by electrically connecting a certain number of battery cells together and putting them into a frame in order to protect the battery cells from external impact, heat, vibration, etc. The shape of the battery cell of the present application may be cylindrical, square, or in other arbitrary shapes.

In the present application, a number of battery cells can be assembled together to form a battery module, the battery module includes two or more battery cells, and the specific number depends on the application of the battery module and the parameters of a single battery module.

Fig. 3 is a schematic diagram showing an example of a battery module of the present application. Referring to Fig. 3, in the battery module 4, a plurality of battery cells 5a and 5b may be arranged sequentially in a length direction of the battery module 4 (5a may be first battery cells, and 5b may be second battery cells). Apparently, they may also be arranged in any other way. Further, the plurality of battery cells 5a and 5b can be fixed by fasteners. Optionally, the battery module 4 may further include a housing having a receiving space, and the plurality of battery cells 5a and 5b are received in the receiving space.

< Design of first battery cells and second battery cells>

A first aspect of the present application provides a battery module, including a first type of battery cells and a second type of battery cells electrically connected at least in series, wherein the first type of battery cells and the second type of battery cells are battery cells with different chemical systems, the first type of battery cells includes N first battery cells, and the second type of battery cells includes M second battery cells, where N and M are integers of no less than 1; and the first battery cells and the second battery cells at least satisfy the following relationships: (1) $S1 \times CD1 \leq S2 \times CD2$; (2) $4.5 \times 10^3 \leq S1 \times C1 \leq 3.6 \times 10^4$, in Ah·W·°C/(g·L); and (3) $3 \times 10^4 \leq S2 \times CD2 \leq 8.5 \times 10^5$, in Ah·W·°C/(g·L); where S1 is a total DSC heat release of the positive electrode plate of the first battery cell per unit mass in a nitrogen atmosphere and a range of from 50°C to 500°C, in W·°C/g; S2 is a DSC heat release of the positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L.

In the present application, the inventor found through a lot of studies that a product of a total area of DSC exothermic peaks of a positive electrode plate in a battery cell and a capacity of the battery cell can more accurately and objectively reflect a maximum possible heat release of the individual battery cell under abnormal conditions (such as the occurrence of an internal short circuit). By matching the first type of battery cells with the second type of battery cells that has a different heat release and a different chemical system than that of the first type of battery cells to form a large-capacity battery module with a relatively high energy density, heat spread to other individual battery cells in the battery module can be effectively avoided in the case of thermal runaway of an individual battery cell in the battery module, thereby improving the safety performance of the battery module.

In the present application, the DSC exothermic peak value of the positive electrode plate of the first battery cell or the second battery cell per unit mass in a nitrogen atmosphere and a range of from 50°C to 500°C can be measured by a method known in the art. As an example, it can be measured with reference to the national standard document GB/T 13464-2008:

1) Test conditions: test equipment model: NETZSCH STA 449F3; sample: the positive electrode plate is punched into a small wafer having a diameter of 5 mm (including a current collector, when the heat release per unit mass is calculated, the mass of the current collector needs to be deducted); test start temperature: room temperature; heating rate: 10 K/min; test atmosphere: nitrogen; and sample preparation environment: sample is prepared in a glove box;
2) Standard processing of data after the test: in the DSC test results, the ordinate is a heat flow in mW/mg, and the abscissa is a temperature in °C. An empty crucible test result baseline needs to be deducted from the test data; and the level from 50°C to an end temperature is adjusted. After fitting calculation, the DSC heat release of the test sample in the nitrogen atmosphere and the range of 50°C to 500°C is obtained.

In the above-mentioned test method, the positive electrode plate sample may be a positive electrode plate that is directly prepared and has not been put into the battery cell, or a positive electrode plate disassembled from the battery cell that has participated in the charging and discharging process. When the positive electrode plate sample is a positive electrode plate disassembled from the battery cell that has participated in the charging and discharging process, the positive electrode plate sample can be obtained by the following steps:

1) The battery cell is fully discharged with a small current (for example, when a battery cell whose positive electrode active material is a lithium nickel manganese cobalt oxide is used, the battery cell is discharged with 0.1 C to 2.8 V; when a battery cell whose positive electrode active material is a lithium iron phosphate is used, the battery cell is discharged with 0.1 C to 2.5V);
2) The fully discharged battery cell is disassembled in a drying room or glove box, and the corresponding positive electrode plate is taken out;
3) The disassembled positive electrode plate is sealed with an aluminum-plastic film for storage in the drying room, and then transferred to the glove box, alternatively the following operations are performed directly in the glove box;
4) The positive electrode plate is cut into a 3 cm × 3 cm electrode plate (the button electrode plate does not need to be cut, but is used directly), the electrode plate is placed in a watch glass with an appropriate size, an appropriate amount of dimethyl carbonate (DMC) is add to overflow the electrode plate, the electrode plate after soaked for 12 hours is taken out and put in a new watch glass, then an appropriate amount of fresh DMC solvent is added, and the electrode plate is repeatedly cleaned twice;
5) The positive electrode plate is taken out of the watch glass, dried in the glove box for more than 6 h, and sealed with an aluminum-plastic film for later use.

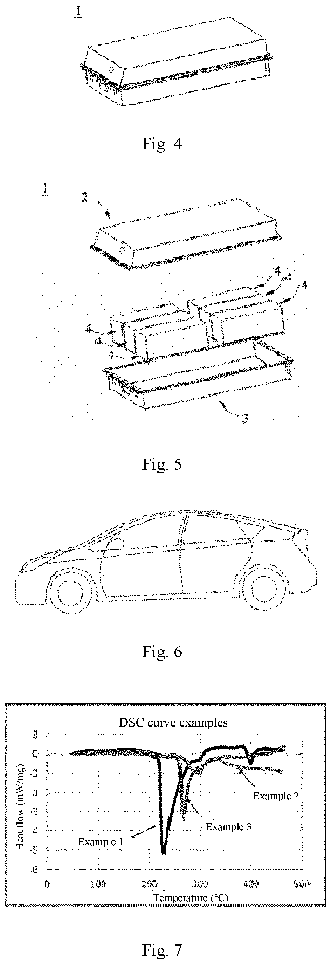

Fig. 7 is a schematic diagram showing DSC curves of positive electrode plates of battery cells with different chemical systems obtained by DSC test. In the DSC test results, the ordinate is a heat flow in mW/mg, and the abscissa is a temperature in °C. As shown in Fig. 7, the DSC curves can reflect endothermic and exothermic characteristics at a certain peak position.

In the present application, the integral area is a parameter obtained by integrating the DSC curve in Fig. 7 within the range of 50°C to 500°C, and the integral area can reflect thermal stability of the positive electrode active material.

In the present application, the battery cell capacity per unit volume of the battery cell is set as CD. That is, CD=battery cell capacity/battery cell volume, in ampere hour per liter (Ah/L). The battery cell is not limited to a square shell battery cell, for example, it may also be other types of battery cells such as a cylindrical battery cell.

In the present application, the unit volume capacity of the first battery cell or the second battery cell can be measured by a method known in the art. As an example, the following method can be used for measurement:

1) Test method for battery cell capacity: a battery cell to be tested is selected, and a full charging capacity and a discharging capacity of the battery cell at a standard rate at 25°C are tested using a battery cell charging and discharging machine and a high-low temperature box, wherein the discharging capacity is a capacity value of the battery cell. The charging and discharging rate is 0.33 C (C represents a rated capacity of the battery cell. The charging/discharging current is a rate multiplied by the rated capacity of the battery cell, and the rated capacity is based on the battery cell capacity identified in the GBT certification document of the battery cell);

2) Test method for battery cell volume: if the battery cell is a square shell battery cell, the battery cell volume is a product of the length, height, and thickness of the battery cell shell, wherein the height does not include the height of a pole, in liters (L). If the battery cell is a soft-packed battery cell, the battery cell volume is: a product of (length + 2 × R), (height + 2 × R) and thickness of the soft-packed battery cell, where R is a packaging chamfer radius of the aluminum-plastic film, and the height is a height without a battery cell tab/pole, in liters (L). If the battery cell is a cylindrical cell, the battery cell volume is: a product of a bottom area of the cylinder and a height of the battery cell, where the height does not include the height of a pole, in liters (L).

In the present application, the battery cells with different chemical systems are classified by means of thermal stability of positive electrode active materials in the battery cells and the capacity characteristics of the battery cells per unit volume, and the battery cells with different safety characteristics and capacity characteristics are matched to form a battery module/battery pack, which can ensure that the battery module or battery pack has relatively high capacity density and high safety.

In some embodiments of the present application, $0 < S1 \times CD1 \leq 3 \times 10^4$. Optionally, $9 \times 10^3 \leq S1 \times CD1 \leq 2.5 \times 10^4$. Specifically, $S1 \times CD1$ may be 500, 1000, 1500, 2000, 2500, 3000, 3500, 4000, 4500, 5000, 5500, 6000, 6500, 7000, 7500, 8000, 8500, 9000, 9500, 10000, 10500, 11000, 11500, 12000, 12500, 13000, 13500, 14000, 14500, 15000, 15500, 16000, 16500, 17000, 17500, 18000, 18500, 19000, 19500, 20000, 20500, 21000, 21500, 22000, 22500, 23000, 23500, 24000, 24500, 25000, or its value is within a range obtained by combining any two of the above values. In the present application, when the $S1 \times CD1$ of the first type of battery cells is within the above range, the maximum possible heat release of the first type of battery cells can be maintained within a relatively low range, which is beneficial to further improving the heat spread and further improving the safety performance of the battery module.

In some embodiments of the present application, $4.03 \times 10^4 \leq S2 \times CD2 \leq 2.7 \times 10^5$. Specifically, $S2 \times CD2$ may be 40300, 41000, 42000, 43000, 44000, 45000, 46000, 47000, 48000, 49000, 50000, 51000, 52000, 53000, 54000, 55000, 56000, 57000, 58000, 59000, 60000, 61000, 62000, 63000, 64000, 65000, 66000, 67000, 68000, 69000, 70000, 71000, 72000, 73000, 74000, 75000, 76000, 77000, 78000, 79000, 80000, 81000, 82000, 83000, 84000, 85000, 86000, 87000, 88000, 89000, 90000, 91000, 92000, 93000, 94000, 95000, 96000, 97000, 98000, 99000, 100000, 101000, 102000, 103000, 104000, 105000, 106000, 107000, 108000, 109000, 110000, 111000, 112000, 113000, 114000, 115000, 116000, 117000, 118000, 119000, 120000, 121000, 122000, 123000, 124000, 125000, 126000, 127000, 128000, 129000, 130000, 131000, 132000, 133000, 134000, 135000, 136000, 137000, 138000, 139000, 140000, 141000, 142000, 143000, 144000, 145000, 146000, 147000, 148000, 149000, 150000, 151000, 152000, 153000, 154000, 155000, 156000, 157000, 158000, 159000, 160000, 161000, 162000, 163000, 164000, 165000, 166000, 167000, 168000, 169000, 170000, 171000, 172000, 173000, 174000, 175000, 176000, 177000, 178000, 179000, 180000, 181000, 182000, 183000, 184000, 185000, 186000, 187000, 188000, 189000, 19 0000, 191000, 192000, 193000, 194000, 195000, 196000, 197000, 198000, 199000, 200000, 201000, 202000, 203000, 204000, 205000, 206000, 207000, 208000, 209000, 210000, 211000, 212000, 213000, 214000, 215000, 216000, 217000, 218000, 219000, 220000, 221000, 222000, 223000, 224000, 225000, 226000, 227000, 228000, 229000, 230000, 231000, 232000, 233000, 234000, 235000, 236000, 237000, 238000, 239000, 240000, 241000, 242000, 243000, 244000, 245000, 246000, 247000, 248000, 249000, 250000, 251000, 252000, 253000, 254000, 255000, 256000, 257000, 258000, 259000, 260000, 261000, 262000, 263000, 264000, 265000, 266000, 267000, 268000, 269000, 270000, or its value is within a range obtained by combining any two of the above values. In the present application, when the $S2 \times CD2$ of the second type of battery cells is within the above range, the maximum possible heat release of the second type of battery cells can be maintained within a controllable range. When thermal runaway occurs, the heat released from the individual battery cell is limited, which is also beneficial to further improving the heat spread and further improving the safety performance of the battery module.

In some embodiments of the present application, the battery module includes m second battery cells that are adjacent to at least one of the first battery cells and are continuously arranged, and satisfies the following: 1.33 m $\leq$ m $\times$ S2 $\times$ CD2/(S1 $\times$ CD1) < 113, and 1 $\leq$ m $\leq$ 50. Specifically, m $\times$ S2 $\times$ CD2/(S1 $\times$ CD1) may be 1.33, 5, 10, 15, 20, 25, 30, 35, 40, 45, 50, 55, 60, 65, 70, 75, 80, 85, 90, 95, 100, 105, 110, 113, or its value is within a range obtained by combining any two of the above values. In the present application, the number of second battery cells adjacent to one side of the first battery cells is limited so as to guide the arrangement during specific use. In order to ensure that the first battery cell blocks heat spread, the number of second battery cells that are adjacent to the first battery cell and are continuously arranged can be further controlled. When the battery module includes m second battery cells that are adjacent to at least one the first battery cells and are continuously arranged and m $\times$ S2 $\times$ CD2/(S1 $\times$ CD1) is within the above range, continuous accumulation of excessive second battery cells can be effectively prevented, thereby avoiding thermal runaway of the entire battery module caused by too high energy released and too high temperature due to the contemporary failure of continuous second battery cells when the failing battery cell is a second battery cell.

In some embodiments of the present application, the battery module includes m second battery cells that are adjacent to at least one of the first battery cells and are continuously arranged, and satisfies the following: T1 $\geq$ 0.05 $\times$ m $\times$ T2, and m $\geq$ 1, where T1 is the thickness of the first battery cell, and T2 is the thickness of the second battery cell, in mm. Optionally, T1 $\geq$ 0.33 $\times$ m $\times$ T2. In the present application, the thickness of the battery cell refers to a length in the direction perpendicular to an adjacent attaching surface. In order to meet the special design of some battery packs and the capacity design difference caused by service life matching difference, the thickness of the battery cell can be flexibly designed. In order to ensure that the battery cells can still achieve the effect of blocking heat spread under different arrangement, the thickness relationship between the first battery cells and the second battery cells needs to be adjusted. The length of the battery module is generally limited by the thickness of each battery cell, and the thickness of the battery cell is an important factor in blocking heat spread. When an individual second battery cell fails, the greater the thickness of the second battery cell is, and the more the adjacent second battery cells are, the higher the total energy that can be released during failure is. Therefore, the thickness of the first battery cell needs to be adjusted adaptively to effectively absorb the heat release without open flames, and to extend the heat blocking time, so as to achieve the effect of blocking the heat spread of the overall battery module/battery pack.

In some embodiments of the present application, the battery module is composed of 1 or more repeating units, in which the repeating unit includes P first battery cells and Q second battery cells, where P and Q are integers of no less than 1, and satisfies the following relationship: 15167 $\leq$ (P $\times$ S1 $\times$ CD1 + Q $\times$ S2 $\times$ CD2)/(P + Q) < 109909; and optionally, 31200 $\leq$ (P $\times$ S1 $\times$ CD1 + Q $\times$ S2 $\times$ CD2)/( P + Q) $\leq$ 102600. Specifically, (P $\times$ S1 $\times$ CD1 + Q $\times$ S2 $\times$ CD2)/(P + Q) may be 15167, 20000, 25000, 30000, 31200, 35000, 40000, 45000, 50000, 55000, 60000, 65000, 70000, 75000, 80000, 85000, 90000, 95000, 100000, 102600, 109909, or its value is within a range obtained by combining any two of the above values. In the present application, in order to ensure the heat spread blocking effect of the overall battery module/battery pack during assembly, the repeating unit can also be optimized for parameter design. When the (P $\times$ S1 $\times$ CD1 + Q $\times$ S2 $\times$ CD2)/(P + Q) of the first battery cells and the second battery cells in the repeating unit is within the above range, it can be ensured that when a plurality of battery modules are assembled randomly, the overall energy is controllable in the event of failure. Under the condition that the first type of battery cells ensures the heat spread blocking effect, the second type of battery cells can be arranged at intervals or continuously, which can average the safety performance and capacity density of the entire battery module/battery pack, and can balance the safety performance and capacity density of the battery module/battery pack.

In the present application, the principle of determining the repeating unit in the battery module is: taking a complete column in the battery pack along the thickness of the battery cells as an object, according to the repetition law of the first battery cells and the second battery cells, if a unit formed by the first battery cells and the second battery cells can be completely repeated, the minimum unit can be defined as a repeating unit in the battery pack. If the unit formed by the first battery cells and the second battery cells in the column cannot be completely repeated, the column itself constitutes only one repeating unit.

In some embodiments of the present application, the positive electrode active material for the first battery cell includes at least one of a lithium-containing phosphate represented by formula (I) or a lithium manganese-based oxide represented by formula (II),

$$LiFe_{1-x2-y2}Mn_{x2}M'_{y2}PO_4 \qquad \text{formula (I)}$$

$$Li_{1+x3}Mn_eN_{2-e}O_{4-d}B_d \qquad \text{formula (II)}$$

wherein, in formula (I), $0 \leq x2 \leq 1$, $0 \leq y2 \leq 0.1$, and M' is one or more selected from transition metal elements and non-transition metal elements other than Fe and Mn; and in formula (II), $-0.1 \leq x3 \leq 0.2$, $0 < e \leq 2$, $0 \leq d < 1$, N is one or more of Ni, Fe, Cr, Ti, Zn, V, Al, Mg, Zr and Ce, and B is one or more of S, N, F, Cl, Br and I.

In some embodiments of the present application, the positive electrode active material for the first battery cell includes one or more of $LiFePO_4$, $LiMnPO_4$, $LiMn_{1-x3}Fe_{x3}PO_4$, $LiV_{1-x3}Fe_{x3}PO_4$, $LiMn_2O_4$, and $LiMn_{1.9}Al_{0.1}O_4$, where x3 independently satisfies $0 < x3 < 1$.

In some embodiments of the present application, based on 100% by weight of the positive electrode active material for the first battery cell, at least one of the lithium-containing phosphate represented by formula (I) or the lithium manganese-based oxide represented by formula (II) has a weight percentage of no less than 30%.

In some embodiments of the present application, the positive electrode active material for the second battery cell includes a lithium transition metal oxide represented by formula (III),

$$Li_{1+x1}Ni_aCo_bM_{1-a-b}O_{2-y1}A_{y1} \qquad \text{formula (III)}$$

where $-0.1 \leq x1 \leq 0.2$, $0.3 \leq a < 0.95$, $0 < b < 0.2$, $0 < a + b < 1$, $0 \leq y1 < 0.2$, M is one or more selected from Mn, Fe, Cr, Ti, Zn, V, Al, Zr and Ce, and A is one or more selected from S, F, Cl and I; and optionally, $0.5 \leq a < 0.95$, and $0 < b < 0.15$.

In some embodiments of the present application, based on 100% by weight of the positive electrode active material for the second battery cell, the lithium transition metal oxide represented by formula (III) has a weight percentage of no less than 70%.

[Battery pack]

In some embodiments of the present application, two or more of the above-mentioned battery modules may be assembled into a battery pack, and the number of battery modules included in the battery pack depends on the application of the battery pack and the parameters of a single battery module. The battery pack may include a battery box and a plurality of battery modules disposed in the battery box. The battery box includes an upper box body and a lower box body, and the upper box body can cover the lower box body and match the lower box body well to form a closed space for receiving the battery modules. Two or more battery modules can be arranged in the battery box in a desired manner. In the present application, the "battery pack" is made by further assembling one or more battery modules (or a combination directly formed by a plurality of battery cells) with various control and protection systems such as a battery management system and a thermal management system.

Fig. 4 is a schematic diagram showing an example of a battery pack 1 of the present application. Fig. 5 is an exploded view showing an example of the battery pack 1 of the present application shown in Fig. 4. Referring to Figs. 4 and 5, the battery pack 1 may include a battery box and a plurality of battery modules 4 disposed in the battery box. The battery box includes an upper box body 2 and a lower box body 3 and the upper box body 2 is used to cover the lower box body 3 to form a closed space for receiving the battery modules 4. The plurality of battery modules 4 may be arranged in the battery box in any manner.

[Electric apparatus]

In some embodiments of the present application, the electric apparatus of the present application includes at least one of the battery module or battery pack of the present application, and the battery module or battery pack may be used as a power source of the electric apparatus, and may also be used as an energy storage unit of the electric apparatus. The electric apparatus includes, but is not limited to, a mobile digital apparatus (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf vehicle, an electric truck, etc.), an electric train, a ship, a satellite, an energy storage system, etc.

Fig. 6 is a schematic diagram showing an example of the electric apparatus using the battery module of the present application as a power source. The electric apparatus is a pure electric vehicle, a hybrid electric vehicle, or a plug-in hybrid electric vehicle. In order to meet the requirements of the electric apparatus for high power and high energy density, battery packs or battery modules may be used.

[Method for manufacturing a battery module]

The present application proposes a method for manufacturing a battery module, including the following steps:

obtaining a first type of battery cells and a second type of battery cells,
wherein the first type of battery cells and the second type of battery cells are battery cells with different chemical systems,
the first type of battery cells includes N first battery cells,

the second type of battery cells includes M second battery cells, where N and M are integers of no less than 1, and the first battery cells and the second battery cells at least satisfy the following relationships: (1) $S1 \times CD1 \le S2 \times CD2$; (2) $4.5 \times 10^3 \le S1 \times C1 \le 3.6 \times 10^4$, in Ah·W·°C/(g·L); and (3) $3 \times 10^4 \le S2 \times CD2 \le 8.5 \times 10^5$, in Ah·W·°C/(g·L); where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L; and

electrically connecting the first type of battery cells and the second type of battery cells at least in series to form the battery module described in the first aspect of the present application.

[Device for manufacturing a battery module]

The present application proposes a device for manufacturing a battery module, including:

a clamping arm unit for obtaining a first type of battery cells and a second type of battery cells,
wherein the first type of battery cells and the second type of battery cells are battery cells with different chemical systems,
the first type of battery cells includes N first battery cells,
the second type of battery cells includes M second battery cells, where N and M are integers of no less than 1, and the first battery cells and the second battery cells at least satisfy the following relationships: (1) $S1 \times CD1 \le S2 \times CD2$; (2) $4.5 \times 10^3 \le S1 \times CI \le 3.6 \times 10^4$, in Ah·W·°C/(g·L); and (3) $3 \times 10^4 \le S2 \times CD2 \le 8.5 \times 10^5$, in Ah·W·°C/(g·L); where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L;
an assembling unit for electrically connecting the first type of battery cells and the second type of battery cells in series at least to form the battery module described in the first aspect of the present application; and
a control unit for controlling the clamping arm unit and the assembling unit.

**Examples**

Hereinafter, the technical solutions of the present application and the advantages thereof are described in detail through specific examples.

Preparation of Battery Cell

Referring to GB/T 31484-2015 titled Requirements and Test Methods for Cycle Life of Power Storage Batteries for Electric Vehicles, the preparation methods of battery cells in examples and comparative examples were as follows.

1. Preparation of positive electrode slurry

A positive electrode active material (the type and relative mass proportion of the positive electrode active material in each example were shown in Table 1), conductive carbon Super P, and a binder polyvinylidene fluoride (PVDF) were fully stirred and mixed in an appropriate amount of N-methylpyrrolidone (abbreviated as NMP) solvent at a weight ratio of 95:3:2 to form a uniform and stable slurry with a viscosity of 10000 mPa·s, and the slurry generated no gelling, stratification or sedimentation and other phenomena within 24 to 48 hours of standing.

2. Preparation of a positive electrode plate

The positive electrode material slurry was uniformly applied on a positive electrode current collector Al foil, the electrode plate was cold-pressed to a designed compaction after dried, and a positive electrode plate was obtained by slitting the electrode plate for later use. The heat release S of the positive electrode plate in each example in a nitrogen atmosphere and a range of from 50°C to 500°C was shown in Table 1.

3. Preparation of an electrolytic solution

An equal volume of ethylene carbonate was dissolved in propylene carbonate, and then lithium hexafluorophosphate was uniformly dissolved in the mixed solvent for later use (the lithium hexafluorophosphate had a concentration of 1.1 M/L) to obtain an electrolytic solution.

4. Preparation of a negative electrode plate

Negative electrode active materials such as graphite, conductive carbon, a binder polystyrene-butadiene copolymer (SBR), a thickener sodium carboxymethylcellulose (CMC) were fully stirred and mixed in an appropriate amount of water solvent at a weight ratio of 95:2:2:1 to form a uniform and stable negative electrode slurry; the slurry was evenly applied on a negative electrode current collector Cu foil, and the electrode plate was cold-pressed to a designed compactness after dried, and was slit for later use. 5. Separator

PP is used as a separator.

6. Preparation of a battery cell

The above-mentioned positive electrode plate, separator and negative electrode plate were wound together by using the conventional battery cell manufacturing process to form a bare battery cell, then the bare battery cell was placed in a battery shell in which the above-mentioned electrolyte was injected, and then the procedures of forming and sealing were carried out, finally obtaining a rechargeable power battery cell. The unit volume capacity CD, thickness T, and $S \times CD$ value of the battery cell in each example were shown in Table 1.

Hereinafter, methods for testing parameters of the battery cell will be described. DSC Test Process

1) Test conditions: test equipment model: NETZSCH STA 449F3; sample: the electrode plate was punched into a small wafer having a diameter of 5 mm (including a current collector, thus the mass of the current collector was required to be deducted when the heat release of the positive electrode plate per unit mass was calculated); test start temperature: room temperature; heating rate: 10 K/min; test atmosphere: nitrogen; sample preparation environment: sample was prepared in a glove box;
2) Test standard: referring to the national standard document GB/T 13464-2008;
3) Standard processing of data after the test: an empty crucible test result baseline was required to be deducted from the test data; and the level from 50°C to an end temperature was adjusted.

Test on Battery Cell Capacity per Unit Volume

1) Test method for battery cell capacity: a battery cell to be tested was selected, and a full charging capacity and a discharging capacity of the battery cell at a standard rate at 25°C were tested using a battery cell charging and discharging machine and a high-low temperature box, wherein the discharging capacity was a capacity value of the battery cell. The charging and discharging rate was 0.33 C (C represents a rated capacity of the battery cell. The charging/discharging current was a rate multiplied by the rated capacity of the battery cell, and the rated capacity was based on the battery cell capacity identified in the GBT certification document of the battery cell);
2) Test method for battery cell volume: when the battery cell was a square shell battery cell, the battery cell volume was a product of the length, width, and height of the battery cell shell, wherein the height did not include the height of a pole. The capacity of the battery cell per unit volume was set as CD = battery cell capacity/ battery cell volume, in Ah/L.

Through the above preparation of the battery cell, a first type of battery cells and a second type of battery cells with different heat release and capacity characteristics were obtained, and the specific parameters of each battery cell were shown in Table 1.

Fig. 7 is a schematic diagram showing DSC curves of B1 (Example 1), A1 (Example 2), and A2 (Example 3) obtained by differential scanning calorimetry (DSC) test. In the DSC test results, the ordinate is a heat flow in mW/mg, and the abscissa is a temperature in °C. As shown in Fig. 7, the DSC curves can reflect endothermic and exothermic characteristics at a certain peak position.

Table 1

| Type | Type of positive electrode active material | T (mm) | S (W·°C/g) | CD (Ah/L) | S × CD (Ah·W·°C/ (g·L)) |
|---|---|---|---|---|---|
| First type of battery cell A1 | $LiFePO_4$ | 28 | 150 | 60 | 9000 |
| First type of battery cell A2 | 70 wt% $LiFePO_4$ + 30 wt% $LiNi_{0.55}Co_{0.15}Mn_{0.3}O_2$ | 28 | 200 | 125 | 25000 |
| First type of battery cell A3 | 70 wt% $LiFePO_4$ + 30 wt% $LiNi_{0.55}Co_{0.15}Mn0.3O_2$ | 28 | 230.77 | 130 | 30000 |
| First type of battery cell A4 | 50 wt% $LiFePO_4$ + 50 wt% $LiNi_{0.55}Co_{0.15}Mn0.3O_2$ | 28 | 267 | 135 | 36045 |
| First type of battery cell A5 | $LiFePO_4$ | 14 | 150 | 30 | 4500 |
| | | | | | |
| Second type of battery cell B1 | $LiNi_{0.55}Co_{0.15}Mn_{0.3}O_2$ | 28 | 600 | 200 | 120000 |
| Second type of battery cell B2 | $LiNi_{0.55}Co_{0.15}Mn_{0.3}O_2$ | 28 | 405 | 180 | 72900 |
| Second type of battery cell B3 | 20 wt% $LiFePO_4$ + 80 wt% $LiNi_{0.55}CO_{0.15}Mn_{0.3}O_2$ | 28 | 260 | 155 | 40300 |
| Second type of battery cell B4 | $LiNi_{0.55}Co_{0.15}Mn_{0.3}O_2$ | 28 | 900 | 300 | 270000 |
| Second type of battery cell B5 | $LiNi_{0.55}Co_{0.15}Mn_{0.3}O_2$ | 28 | 1500 | 600 | 900000 |
| Second type of battery cell B6 | $LiNi_{0.55}Co_{0.15}Mn_{0.3}O_2$ | 28 | 260 | 116 | 30160 |
| Second type of battery cell B7 | $LiNi_{0.55}Co_{0.15}Mn_{0.3}O_2$ | 79 | 600 | 280 | 168000 |

Assembly of Battery Module

N first battery cells and M second battery cells were obtained, and the first battery cells and the second battery cells were arranged in a certain order and electrically connected in series.

In Examples 1 to 5 and Comparative Examples 1 and 2, the battery module was assembled by the following way: 3 first battery cells and 2 second battery cells were obtained, and the first battery cells and the second battery cells were arranged at intervals (the first battery cells were denoted as A, the second battery cells were denoted as B, and the order of arrangement was ABABA) and electrically connected in series.

In Examples 6 to 23, the arrangement order of the first battery cells and the second battery cells in the battery module, the number M of first battery cells, the number N of second battery cells, the number m of second battery cells that are adjacent to at least one of the first battery cells and are continuously arranged, the number P of first battery cells in a repeating unit, and the number Q of second battery cells in the repeating unit were all different. See Table 4 and Table 6 for details.

Heat Spread Test on Battery module

In the present application, the heat spread test on the battery module may refer to the heat diffusion test in appendix C of the national standard (GB 38031-2020), and the specific steps were as follows:

1) All battery cells to be tested were fully charged (charged to a nominal voltage at a rate of 0.33 C by using a constant current and a constant voltage), the battery cells were arranged and electrically connected as described in each example, and the battery module was fixed by module end plates + side plates or a steel belt. An appropriate steel pin (generally having a diameter of 3 mm or 4 mm) or a heating plate (generally 500 W, whose power and size of can be adjusted according to the capacity of the battery cells and the size of the shell) was chosen;

2) The battery cell components were placed in a Pack simulation sealed box (the sealed box had an explosion-proof function), and the voltage and temperature of each battery cell were monitored;

3) The heating plate verified the heat spread: the 1st second battery cell closely adjacent to the 1st first battery cell from left to right in the battery module was selected as a target battery cell, a heating plate was closely attached to its end plate, and the heating plate was powered on and heated until the target battery cell failed, and the heat spread was observed;

4) The battery module was observed for two hours to confirm whether the heat spread occurred in other first battery cells in the battery cell group and other second type of battery cells on a non-triggering side (the failure determination was the same); after cooled for 24 hours, the appearance of the battery cells was confirmed and the capacity thereof was tested.

5) Heat spread determination criteria: to determine whether there was an open flame in the first battery cell nearest the target battery cell and in the battery cell farther from the target battery cell; if there was no open flame, no heat spread occurred; if there was an open flame, the heat spread occurred;

6) Remarks: battery cell failure criteria: if two of the following three conditions were satisfied, failure was determined; ① the temperature was $\geq 280\ °C$ ; ② the temperature rise rate of the battery cells was $dT/dt \geq 1\ °C/s$, which lasted for 3 s or more; ③ the voltage drop of the battery cells was more than 25% of the initial voltage; and ④ the battery cell produced an open flame.

Through the above preparation method of the battery module, the first type of battery cells and the second type of battery cells with different positive electrode plate heat release and capacity characteristics were assembled to obtain the battery modules of Examples 1-23 and Comparative Examples 1 and 2. The above-mentioned heat spread test was performed on the battery modules of the examples and the comparative examples, where the target cells were the second battery cells marked in bold in the "arrangement of battery module" in Tables 3, 5, and 7. See Tables 3, 5, and 7 for the design parameters and heat spread performance test results of the battery modules.

Table 2

| Example number | Number of the first type of battery cell | Number of the second type of battery cell | T/ (m* T2) | S1*CD1 (Ah·W·°C/ (g·L)) | S2*CD2 (Ah·W·°C/ (g·L)) | m × S2 × CD2/ (S1 × CD1) | (P × S1 × CD1 + Q × S2 × CD2) /(P + Q) (Ah·W·°C/(g·L)) |
|---|---|---|---|---|---|---|---|
| Example 1 | A1 | B1 | 1 | 9000 | 120000 | 13.33 | 53400 |
| Example 2 | A1 | B2 | 1 | 9000 | 72900 | 8.10 | 34560 |
| Example 3 | A1 | B3 | 1 | 9000 | 40300 | 4.48 | 21520 |
| Example 4 | A1 | B4 | 1 | 9000 | 270000 | 30.00 | 113400 |
| Example 5 | A1 | B6 | 1 | 9000 | 30160 | 3.35 | 17464 |
| Comparative Example 1 | A1 | B5 | 1 | 9000 | 900000 | 100.00 | 365400 |
| Comparative Example 2 | A2 | B1 | 1 | 36045 | 102000 | 2.83 | 62427 |

Table 3

| Example number | Volume capacity density of battery module | Heat spread result of the first type of battery cell | Heat spread result of the second type of battery cell |
|---|---|---|---|
| Example 1 | 116 | Pass | Pass |
| Example 2 | 108 | Pass | Pass |
| Example 3 | 98 | Pass | Pass |
| Example 4 | 156 | Pass | Pass |
| Example 5 | 82.4 | Pass | Pass |

(continued)

| Example number | Volume capacity density of battery module | Heat spread result of the first type of battery cell | Heat spread result of the second type of battery cell |
|---|---|---|---|
| Comparative Example 1 | 276 | Pass | NG (all thermal runaway) |
| Comparative Example 2 | 149 | NG (all thermal runaway) | NG (all thermal runaway) |

Table 4

| Example number | Arrangement of battery module | M | N | m | P | Q | 1.33 m | $m \times S2 \times CD2/(S1 \times CD1)$ | $(P \times S1 \times CD1 + Q \times S2 \times CD2)/(P + Q)$ (Ah·W·°C/(g·L)) |
|---|---|---|---|---|---|---|---|---|---|
| Example 6 | Double-row module: A5**B7**A5B7A5A5B7A5B7A5 | 6 | 4 | 1 | 3 | 2 | 1.33 | 37.33 | 69900 |
| Example 7 | Double-row module: A5**B7**B7A5A5B7B7A5 | 4 | 4 | 2 | 2 | 2 | 2.66 | 74.67 | 86250 |
| Example 8 | Double-row module: A5**B7**B7B7A5A5B7B7B7A5 | 4 | 6 | 3 | 2 | 3 | 3.99 | 112 | 102600 |
| Example 9 | Single-row module: A1A1A1A1A1A1A1A1**B1**A1A1A1A1A1A1A1A1A1 | 1 7 | 1 | 1 | 17 | 1 | 1.33 | 1.33 | 15167 |
| Example 10 | Double-row module: A1A1**B1**A1A1 A1A1B1A1A1 | 8 | 2 | 1 | 4 | 1 | 1.33 | 1.33 | 31200 |
| Example 11 | Double-row module: A1**B1**A1B1A1 A1B1A1B1A1 | 6 | 4 | 1 | 3 | 2 | 1.33 | 1.33 | 53400 |
| Example 12 | Double-row module: B1A1**B1**A1B1 B1A1B1A1B1 | 4 | 6 | 1 | 2 | 3 | 1.33 | 1.33 | 75600 |
| Example 13 | Single-row module: A1**B1**B1B1B1B1A1B1B1B1B1B1A1B1B1B1B1A1 | 4 | 15 | 5 | 4 | 15 | 6.65 | 6.67 | 96632 |
| Example 14 | Single-row module: B1A1**B1**B1B1B1B1B1B1B1B1B1B1B1B1B1B1B1B1 B1A1 | 2 | 21 | 20 | 2 | 20 | 26.6 | 26.67 | 109909 |
| Example 15 | Single-row module: B1A1**B1**B1B1B1B1B1B1B1B1B1B1B1B1B1B1B1B1 B1B1A1 | 2 | 22 | 21 | 2 | 21 | 27.93 | 26.67 | 110348 |

Table 5

| Example number | Volume capacity density of battery module | Heat spread result of the first type of battery cell | Heat spread result of the second type of battery cell |
|---|---|---|---|
| Example 6 | 130 | Pass | Pass |
| Example 7 | 155 | Pass | Pass |
| Example 8 | 180 | Pass | Pass |
| Example 9 | 68 | Pass | Pass |
| Example 10 | 88 | Pass | Pass |
| Example 11 | 116 | Pass | Pass |
| Example 12 | 144 | Pass | Pass |
| Example 13 | 171 | Pass | Pass |
| Example 14 | 187 | Pass | Pass |
| Example 15 | 188 | Pass | NG (thermal runaway in all B 1 battery cells) |

Table 6

| Example number | Arrangement of battery module | m | T1/ (m*T2) | 1.33 m | P | Q | m × S2 × CD2/ (S1 × CD1) | (P × S1 × CD1 + Q × S2 × CD2)/(P + Q) |
|---|---|---|---|---|---|---|---|---|
| Example 16 | Double-row module: B7A5**B7**A5 A5B7A5B7 | 1 | 1.000 | 1.33 | 2 | 2 | 37 | 86250 |
| Example 17 | Single-row module: B7A5**B7**B7A5B7B7A5B7B7A5 | 2 | 0.089 | 2.66 | 4 | 7 | 75 | 108545 |
| Example 18 | Double-row module: B7A5**B7**B7B7A5 B7A5**B7**B7B7A5 | 3 | 0.059 | 3.99 | 2 | 4 | 112 | 113500 |
| Example 19 | Double-row module: B1A1**B1**A1B1B1 B1A1**B1**A1B1 | 1 | 1.000 | 1.33 | 2 | 3 | 13 | 75600 |
| Example 20 | Double-row module: B1A1**B1**B1B1A1 B1A1**B1**B1B1A1 | 3 | 0.333 | 3.99 | 2 | 4 | 40 | 83000 |
| Example 21 | Single-row module: B7A5**B7**B7B7B7A5A5B7B7A5 | 4 | 0.044 | 5.32 | 4 | 7 | 149 | 108545 |
| Example 22 | Single-row module: B7A5**B7**B7B7B7B7A5A5B7A5 | 5 | 0.035 | 6.65 | 4 | 7 | 187 | 108545 |
| Example 23 | Single-row module: B7A5**B7**B7B7B7B7B7A5A5A5 | 6 | 0.030 | 7.98 | 4 | 7 | 224 | 108545 |

Table 7

| Example number | Volume capacity density of battery module | Heat spread result of the first type of battery cell | Heat spread result of the second type of battery cell |
|---|---|---|---|
| Example 16 | 155 | Pass | Pass |
| Example 17 | 180 | Pass | Pass |

(continued)

| Example number | Volume capacity density of battery module | Heat spread result of the first type of battery cell | Heat spread result of the second type of battery cell |
|---|---|---|---|
| Example 18 | 180 | Pass | Pass |
| Example 19 | 144 | Pass | Pass |
| Example 20 | 144 | Pass | Pass |
| Example 21 | 180 | Pass | Partial NG (thermal runaway in B7 on the left side of the target cell A5 and 4 B7s on the right side) |
| Example 22 | 180 | Pass | Partial NG (thermal runaway in B7 on the left side of the target cell A5 and 5 B7s on the right side) |
| Example 23 | 180 | Pass | Partial NG (thermal runaway in B7 on the left side of the target cell A5 and 6 B7s on the right side) |

According to Tables 2 and 3 above, compared with Comparative Examples 1 and 2, in Examples 1 to 5 of the present application, by matching and connecting the first type of battery cells with the second type of battery cells with a different chemical system and a different maximum heat release than that of the first type of battery cells in series and controlling the $S \times CD$ of the first battery cells and the second battery cells to be within an appropriate range where product of the heat released by the positive electrode plate in the battery cell and the unit volume capacity of the battery cell reflected the maximum heat release of the battery cell under thermal runaway conditions, the battery module composed of the first type of battery cells and the second type of battery cells can have a relatively high volume capacity density, and the improvement effect on the heat spread of the battery module under thermal runaway was significantly improved.

According to Tables 4 and 5 above, when $m \times S2 \times CD2/(S1 \times CD1)$ and $(P \times S1 \times CD1 + Q \times S2 \times CD2)/(P + Q)$ were within the above range, the arrangement of the module can be satisfied and the module still had the effect of blocking the heat spread. ① The number of second battery cells adjacent to one side of the first battery cell should be controlled to satisfy the relationship of $1.33 \, m \leq m \times S2 \times CD2/(S1 \times CD1) \leq 113$; and ② the total energy ratio relationship between the first battery cells and the second battery cells in the repeating unit should be controlled to satisfy $15167 \leq (P \times S1 \times CD1 + Q \times S2 \times CD2)/(P + Q) < 109909$. Optionally, $31200 \leq (P \times S1 \times CD1 + Q \times S2 \times CD2)/(P + Q) \leq 102600$, which made the capacity density and arrangement more selective. According to Tables 6 and 7 above, the thicknesses of battery cells with different chemical systems were further matched by adjusting the relationship between the thicknesses of the first battery cells and the second battery cells and the number m of second battery cells adjacent to the first battery cell to satisfy $T1 \geq 0.05 \, (M*T2)$, so that the arrangement of the plurality of battery cells in the battery module also satisfied the effect of blocking the heat spread.

The embodiments or implementations in this specification are described in a progressive manner, each embodiment focuses on the differences from other embodiments, and the same or similar parts between the various embodiments may be referred to each other.

In the description of this specification, the description with reference to the terms "one embodiment", "some embodiments", "exemplary embodiments", "examples", "specific examples", or "some examples" and the like means that the specific features, structures, materials, or characteristics described in combination with the embodiments or examples are included in at least one embodiment or example of the present application. In this specification, the schematic expression of the above-mentioned terms does not necessarily refer to the same embodiment or example. Moreover, the described specific features, structures, materials or characteristics can be combined in any one or more embodiments or examples in a suitable manner.

Finally, it should be noted that the above embodiments are only used to illustrate the technical solutions of the present application, rather than limiting the present application. Although the present application has been described in detail with reference to the foregoing embodiments, those of ordinary skill in the art should understood that modifications can still be made to the technical solutions recorded in the foregoing embodiments, or equivalent replacements can be made to some or all of the technical features; and these modifications or replacements do not make the essence of the corresponding technical solutions deviate from the scope of the technical solutions of the embodiments of the present application.

**Claims**

1. A battery module, comprising a first type of battery cells and a second type of battery cells electrically connected at least in series, wherein the first type of battery cells and the second type of battery cells are battery cells with different chemical systems,

   the first type of battery cells comprises N first battery cells,
   the second type of battery cells comprises M second battery cells, where N and M are integers of no less than 1, and the first battery cells and the second battery cells at least satisfy the following relationships:

   $$(1)\ S1 \times CD1 \leq S2 \times CD2;$$

   $$(2)\ 4.5 \times 10^3 \leq S1 \times C1 \leq 3.6 \times 10^4,\ \text{in Ah·W·°C/(g·L);}$$

   and

   $$(3)\ 3 \times 10^4 \leq S2 \times CD2 \leq 8.5 \times 10^5,\ \text{in Ah·W·°C/(g·L);}$$

   where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L.

2. The battery module according to claim 1, wherein

   $$9 \times 10^3 \leq S1 \times CD1 \leq 2.5 \times 10^4,\ \text{and/or}\ 4.03 \times 10^4 \leq S2 \times CD2 \leq 2.7 \times 10^5.$$

3. The battery module according to claim 1 or 2, wherein
   the battery module comprises m second battery cells that are adjacent to at least one of the first battery cells and are continuously arranged, and satisfies $1.33\,m \leq m \times S2 \times CD2/(S1 \times CD1) < 113$, and $1 \leq m \leq 50$.

4. The battery module according to any one of claims 1 to 3, wherein
   the battery module comprises m second battery cells that are adjacent to at least one of the first battery cells and are continuously arranged, and satisfies $T1 \geq 0.05 \times m \times T2$, and $m \geq 1$, where T1 is a thickness of the first battery cell, and T2 is a thickness of the second battery cell, in mm; and optionally, $T1 \geq 0.33 \times m \times T2$.

5. The battery module according to any one of claims 1 to 4, wherein
   the battery module is composed of 1 or more repeating units, and the repeating unit comprises P first battery cells and Q second battery cells where P and Q are integers of no less than 1, and satisfies the following relationship:

   $$15167 \leq (P \times S1 \times CD1 + Q \times S2 \times CD2)/(P + Q) < 109909;\ \text{and optionally,}\ 31200 \leq$$
   $$(P \times S1 \times CD1 + Q \times S2 \times CD2)/(P + Q) \leq 102600.$$

6. The battery module according to any one of claims 1 to 5, wherein

   a positive electrode active material for the first battery cell comprises at least one of a lithium-containing phosphate represented by formula (I) or a lithium manganese-based oxide represented by formula (II),

   $$\text{LiFe}_{1-x2-y2}\text{Mn}_{x2}\text{M'}_{y2}\text{PO}_4 \qquad \text{formula (I)}$$

   $$\text{Li}_{1+x3}\text{Mn}_e\text{N}_{2-e}\text{O}_{4-d}\text{B}_d \qquad \text{formula (II)}$$

wherein in formula (I), $0 \leq x2 \leq 1$, $0 \leq y2 \leq 0.1$, and M' is one or more selected from transition metal elements and non-transition metal elements other than Fe and Mn; and in formula (II), $-0.1 \leq x3 \leq 0.2$, $0 < e \leq 2$, $0 \leq d < 1$, N is one or more of Ni, Fe, Cr, Ti, Zn, V, Al, Mg, Zr and Ce, and B is one or more of S, N, F, Cl, Br and I;

optionally, the positive electrode active material for the first battery cell comprises one or more of $LiFePO_4$, $LiMnPO_4$, $LiMn_{1-x3}Fe_{x3}PO_4$, $LiV_{1-x3}Fe_{x3}PO_4$, $LiMn_2O_4$, and $LiMn_{1.9}Al_{0.1}O_4$, where x3 independently satisfies $0 < x3 < 1$;

optionally, based on 100% by weight of the positive electrode active material for the first battery cell, at least one of the lithium-containing phosphate represented by formula (I) or the lithium manganese-based oxide represented by formula (II) has a weight percentage of no less than 30%.

7. The battery module according to any one of claims 1 to 6, wherein

a positive electrode active material for the second battery cell comprises a lithium transition metal oxide represented by formula (III),

$$Li_{1+x1}Ni_aCo_bM_{1-a-b}O_{2-y1}Ay_1 \qquad \text{formula (III)}$$

where $-0.1 \leq x1 \leq 0.2$, $0.3 \leq a < 0.95$, $0 < b < 0.2$, $0 < a + b < 1$, $0 \leq y1 < 0.2$, M is one or more selected from Mn, Fe, Cr, Ti, Zn, V, Al, Zr and Ce, and A is one or more selected from S, F, Cl and I; and optionally, $0.5 \leq a < 0.95$, and $0 < b < 0.15$;

optionally, based on 100% by weight of the positive electrode active material for the second battery cell, the lithium transition metal oxide represented by formula (III) has a weight percentage of no less than 70%.

8. A battery pack, comprising the battery module according to any one of claims 1 to 7.

9. An electric apparatus, comprising the battery module according to any one of claims 1 to 7 or the battery pack according to claim 8, wherein the battery module or the battery pack can be used as a power source or an energy storage unit of the electric apparatus.

10. A method for manufacturing a battery module, comprising the following steps:

obtaining a first type of battery cells and a second type of battery cells, wherein the first type of battery cells and the second type of battery cells are battery cells with different chemical systems, the first type of battery cells comprises N first battery cells, the second type of battery cells comprises M second battery cells, where N and M are integers of no less than 1, and the first battery cells and the second battery cells at least satisfy the following relationships:

$$(1)\ S1 \times CD1 \leq S2 \times CD2;$$

$$(2)\ 4.5 \times 10^3 \leq S1 \times C1 \leq 3.6 \times 10^4,\ \text{in Ah·W·°C/(g·L)};$$

and

$$(3)\ 3 \times 10^4 \leq S2 \times CD2 \leq 8.5 \times 10^5,\ \text{in Ah·W·°C/(g·L)};$$

where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L; and

electrically connecting the first type of battery cells and the second type of battery cells in series to form the battery module according to any one of claims 1 to 7.

**11.** A device for manufacturing a battery module, comprising:

a clamping arm unit for obtaining a first type of battery cells and a second type of battery cells, wherein the first type of battery cells and the second type of battery cells are battery cells with different chemical systems, the first type of battery cells comprises N first battery cells, the second type of battery cells comprises M second battery cells, where N and M are integers of no less than 1, and the first battery cells and the second battery cells at least satisfy the following relationships:

$$(1)\ S1 \times CD1 \leq S2 \times CD2;$$

$$(2)\ 4.5 \times 10^3 \leq S1 \times C1 \leq 3.6 \times 10^4,\ \text{in Ah} \cdot \text{W} \cdot {}^\circ\text{C}/(\text{g} \cdot \text{L});$$

and

$$(3)\ 3 \times 10^4 \leq S2 \times CD2 \leq 8.5 \times 10^5,\ \text{in Ah} \cdot \text{W} \cdot {}^\circ\text{C}/(\text{g} \cdot \text{L});$$

where S1 is a DSC heat release of a positive electrode plate of the first battery cell per unit mass in a nitrogen atmosphere and a range of from 50°C to 500°C, in W·°C/g; S2 is a DSC heat release of a positive electrode plate of the second battery cell per unit mass in a nitrogen atmosphere and a range of from 50°C to 500°C, in W·°C/g; and CD1 and CD2 are respectively unit volume capacities of the first battery cell and the second battery cell, in Ah/L;
an assembling unit for electrically connecting the first type of battery cells and the second type of battery cells in series at least to form the battery module according to any one of claims 1 to 7; and
a control unit for controlling the clamping arm unit and the assembling unit.

**5**

Fig. 1

**5**

53

52
52

51

Fig. 2

**4**

5a

5b

W    L

Fig. 3

Fig. 4

Fig. 5

Fig. 6

Fig. 7

## INTERNATIONAL SEARCH REPORT

| International application No. |
| --- |
| **PCT/CN2021/091384** |

**A. CLASSIFICATION OF SUBJECT MATTER**

H01M 50/51(2021.01)i; H01M 10/42(2006.01)i; H01M 50/20(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 时代新能源, 串联, 串并联, 电芯, 电池, 磷酸铁锂, 磷酸亚铁锂, 三元, 镍钴锰, 镍钴铝, DSC, 放热, 热失控, 安全, series, batter+, LiFePO4, lithium iron phosphate, nickel, cobalt, safe+, differential scanning calorimetry

**C. DOCUMENTS CONSIDERED TO BE RELEVANT**

| Category* | Citation of document, with indication, where appropriate, of the relevant passages | Relevant to claim No. |
| --- | --- | --- |
| A | CN 112599932 A (WEILAI AUTOMOBILE TECHNOLOGY (ANHUI) CO., LTD.) 02 April 2021 (2021-04-02)<br>description, paragraphs [0007]-[0039] | 1-11 |
| A | CN 208674305 U (DONGGUAN TAFEL NEW ENERGY TECHNOLOGY CO., LTD. et al.) 29 March 2019 (2019-03-29)<br>entire document | 1-11 |
| A | CN 102027617 A (PANASONIC CORP.) 20 April 2011 (2011-04-20)<br>entire document | 1-11 |
| A | JP 2013037862 A (DENSO CORP.) 21 February 2013 (2013-02-21)<br>entire document | 1-11 |
| A | JP 2015170591 A (NAGAURA, C. et al.) 28 September 2015 (2015-09-28)<br>entire document | 1-11 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **06 December 2021** | **16 December 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/091384**

| Patent document cited in search report | | | Publication date (day/month/year) | Patent family member(s) | | | Publication date (day/month/year) |
|---|---|---|---|---|---|---|---|
| CN | 112599932 | A | 02 April 2021 | None | | | |
| CN | 208674305 | U | 29 March 2019 | None | | | |
| CN | 102027617 | A | 20 April 2011 | US | 2011086248 | A1 | 14 April 2011 |
| | | | | JP | WO2009147854 | A1 | 27 October 2011 |
| | | | | WO | 2009147854 | A1 | 10 December 2009 |
| | | | | KR | 101237106 | B1 | 25 February 2013 |
| | | | | KR | 20110008338 | A | 26 January 2011 |
| JP | 2013037862 | A | 21 February 2013 | None | | | |
| JP | 2015170591 | A | 28 September 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 134642008 T
- GB 314842015 T

- GB 380312020 A